# EUROPÄISCHE PATENTANMELDUNG

(11) **EP 1 146 071 A2**
(43) Veröffentlichungstag der Anmeldung: **17.10.2001**
(21) Anmeldenummer: 01108227.8
(22) Anmeldetag: 31.03.2001
(51) Int. Cl.: C08K 3/08, A61J 1/00

(54) **Sauerstoff und Schwefelwasserstoff absorbierendes Material**

(30) Priorität: 14.04.2000 DE 10018471
(71) Anmelder: B. BRAUN MELSUNGEN AG, 34212 Melsungen (DE)
(72) Erfinder: Guardiola, Jaime, Dr., 66424 Homburg (DE)
(74) Vertreter: Jönsson, Hans-Peter, Dr.

(57) **Zusammenfassung**

Gegenstand der Erfindung ist ein Sauerstoff und Schwefelwasserstoff absorbierendes Material sowie die Verwendung des Materials bei der Verpackung von Infusionslösungen.

Das Sauerstoff und Schwefelwasserstoff absorbierende Material auf der Basis von Metallen, Metallhalogenen und organischen Sauerstofffängern in einem Trägermaterial ist dadurch gekennzeichnet, dass das Trägermaterial ausgewählt ist aus einem Gummimaterial auf der Basis von synthetischem Kautschuk.

## Beschreibung

Gegenstand der Erfindung ist ein Sauerstoff und Schwefelwasserstoff absorbierendes Material sowie die Verwendung des Materials bei der Verpackung von Infusionslösungen.

Unter der Bezeichnung AGELESS® ist von der Firma Mitsubishi ein Sauerstoff und Schwefelwasserstoff absorbierendes Material bekannt, dass insbesondere zu Haltbarmachung von Lebensmitteln, aber auch von Infusionsmaterialien eingesetzt wird. Das Material besteht im wesentlichen aus pulverförmigem aktivem Eisen beziehungsweise Eisenoxid, das durch die Aufnahme von Sauerstoff und gegebenenfalls Wasser oxidiert wird.

In der EP 0 366 254 A wird die Einarbeitung eines entsprechenden Materials in eine Sandwich-Konstruktion beschrieben. Hierbei wird ein Gemisch aus metallischem Pulver und Metallhalogenid zwischen zwei Schichten aus thermoplastischem Faser- oder Pulvermaterial eingebracht. Als Materialien werden beispielsweise Polyolefine wie Polyethylen und Polypropylen, Polyester wie Polyethylenterephthalat oder Polyamide wie Nylon genannt. Das Sauerstoff und Schwefelwasserstoff absorbierende Material selbst wird mit einem Bindemittel zwischen die zwei Schichten eingebracht.

In den US-Patenten 5,872,553 und 4,998,400 werden Kunststoffbehälter beschrieben, die mit medizinischen Flüssigkeiten gefüllt sind. Zum Schutz vor Sauerstoff wird zwischen den Beutel und den Umbeutel ein Sauerstoff absorbierendes Material eingebracht. Auch hier wird Bezug genommen auf den von der Firma Mitsubishi vertriebenen Absorber AGELESS®. Dieser wird in gasdurchlässigen Tütchen dem zu verpackenden Produkt beigefügt.

Bei der Sterilisation von Infusionslösungen, die schwefelhaltige Aminosäuren, beispielsweise Cystein oder Acetylcystein enthalten, tritt bei der Hitzesterilisation solcher Lösungen eine teilweise Zersetzung auf.

Die Aufgabe der vorliegenden Erfindung besteht gegenüber dem sogenannten Stand der Technik darin, ein geeignetes verbessertes Trägermaterial für das Sauerstoff und Schwefelwasserstoff absorbierende Material zur Verfügung zu stellen.

Eine erste Ausführungsform der vorliegenden Erfindung umfasst somit ein Sauerstoff und Schwefelwasserstoff absorbierendes Material auf der Basis von Metallen, Metallhalogenen und organischen Sauerstofffängern in einem Trägermaterial, das dadurch gekennzeichnet ist, dass das Trägermaterial ausgewählt ist aus einem Gummimaterial auf der Basis von synthetischen Kautschuk.

Erfindungsgemäß wurde gefunden, dass unterschiedliche Sauerstoff- und Schwefelwasserstoff-Konzentrationen in Abhängigkeit von dem Trägermaterial des Sauerstoff und Schwefelwasserstoff absorbierenden Materials festgestellt werden konnten.

Die Menge des Sauerstoff und Schwefelwasserstoff absorbierenden Materials wird dabei so gewählt, dass beispielsweise während der Dampfsterilisation oder der Langzeitlagerung
a) der Sauerstoffgehalt in der Infusionslösung gering genug gehalten werden kann, um die Infusionslösung vor der weiteren Zersetzung zu schützen und
b) der Schwefelwasserstoff vollständig aus der Infusionslösung entfernt wird.

Besonders bevorzugt im Sinne der vorliegenden Erfindung ist das absorbierende Material ausgewählt aus der Gruppe bestehend aus metallischem Zink, metallischem Eisen, Ascorbinsäure oder Katechin.

Insbesondere bevorzugt in diesem Sinne ist metallisches Zink oder metallisches Eisen bzw. der Oxide.

Es wurde gefunden, dass auch unter ungünstigen Produktionsbedingungen und beispielsweise einer hohen Acetylcystein-Konzentration kurze Zeit nach der Sterilisation Schwefelwasserstoff quantitativ nicht mehr nachweisbar war.

Dies erlaubt die Herstellung von Infusionslösungen mit hohem Acetylcystein- oder Cysteingehalt, die zur Sterilisation einer thermischen Behandlung unterworfen werden.

Besonders bevorzugt im Sinne der vorliegenden Erfindung wird ein Halogen-, insbesondere ein Chlorbutylkautschuk eingesetzt, mit dem das Sauerstoff und Schwefelwasserstoff absorbierende Material vermischt wird.

Das Trägermaterial enthält somit vorzugsweise neben üblichen Vernetzungsmitteln weiterhin Füllstoffe und/oder Farbpigmente. Das Material sollte jedoch möglichst frei von anderen toxischen Stoffen, wie 2-Mercaptobenzotiazol, Nitrosaminen oder natürlichem Kautschuk (Latex) sein. Das so eingesetzte Material ist unempfindlich gegen Dampfsterilisation oder auch Sterilisation mittels Ethylenoxid oder Strahlensterilisation.

Eine weitere Ausführungsform der vorliegenden Erfindung besteht in der Verwendung des oben definierten Sauerstoff und Schwefelwasserstoff absorbierenden Materials bei der Verpackung von Infusionslösungen insbesondere in Plastikbehältnissen zwischen Beutel und Umbeutel.

Die Funktion des absorbierenden Agens ist dabei beispielsweise, dass bei der Hitzesterilisation schwefelhaltiger Aminosäuren (Cystein, Acetylcystein) entstandenen Schwefelwasserstoff zu absorbieren und damit aus der Infusionslösung zu entfernen.

## Patentansprüche

1. Sauerstoff und Schwefelwasserstoff absorbierendes Material auf der Basis von Metallen, Metallhalogenen und organischen Sauerstofffängern in einem Trägermaterial,
**dadurch gekennzeichnet, dass**
das Trägermaterial ausgewählt ist aus einem Gummimaterial auf der Basis von synthetischem Kautschuk.

2. Material nach Anspruch 1, **dadurch gekennzeichnet, dass** das absorbierende Material ausgewählt ist aus der Gruppe bestehend aus metallischem Zink, metallischem Eisen, Ascorbinsäure oder Katechin.

3. Material nach Anspruch 1, **dadurch gekennzeichnet, dass** das der synthetische Kautschuk ein Halogenbutylkautschuk ist.

4. Material nach Anspruch 3, **dadurch gekennzeichnet, dass** der synthetische Kautschuk neben üblichen Vernetzungsmitteln weiterhin Füllstoffe und/oder Farbpigmente enthält.

5. Verwendung eines Sauerstoff und Schwefelwasserstoff absorbierenden Materials nach einem der Ansprüche 1 bis 4 bei der Verpackung von Infusionslösungen in Plastikbehältnissen zwischen Beutel und Umbeutel.
